# EUROPÄISCHE PATENTSCHRIFT

(11) **EP 3 365 198 B1**
(45) Veröffentlichungstag und Bekanntmachung des Hinweises auf die Patenterteilung: **05.08.2020**
(21) Anmeldenummer: 16785097.3
(22) Anmeldetag: 26.09.2016
(51) Int. Cl.: B60R 1/12

(54) **BEFESTIGUNGSANORDNUNG EINES KAMERAMODULS**
CAMERA ASSEMBLY MOUNTING ARRANGEMENT
DISPOSITF DE FIXATION D'UN MODULE DE CAMÉRA

(30) Priorität: 20.10.2015 DE 102015220444
(43) Veröffentlichungstag der Anmeldung: 29.08.2018
(73) Patentinhaber: Magna Mirrors Holding GmbH, 63877 Sailauf (DE)
(72) Erfinder: FUCHS, Paul, 97906 Faulbach (DE)
(74) Vertreter: Völger, Silke Beatrix
(86) Internationale Anmeldenummer: PCT/EP2016/072860
(87) Internationale Veröffentlichungsnummer: WO 2017/067749

(56) Entgegenhaltungen:
- EP-A1- 1 837 236
- WO-A1-2005/080137
- DE-A1-102009 052 988
- DE-T5-112013 004 037
- JP-A- 2004 182 040
- US-A1- 2012 263 450
- US-A1- 2014 063 233

## Beschreibung

### Gebiet der Erfindung

Die Erfindung betrifft ein Kameramodul für ein Kraftfahrzeug umfassend einen Kameraträger, wobei der Kameraträger zumindest einen ersten Befestigungsabschnitt und zumindest einen zweiten Befestigungsabschnitt aufweist.

### Stand der Technik

Üblicherweise sind Kameragehäuse zur Befestigung an Kraftfahrzeugen vorgesehen, wobei in den Kameragehäusen Kameras angeordnet sind. Solche Kameras dienen zur Kollisionsvermeidung, zur Sichtgebung oder zur Bildgebung.

Aus der WO2007053404A2 ist ein Kameramodul bekannt welches zur Befestigung an Kraftfahrzeugen ausgebildet ist, wobei eine Kamera zumindest teilweise mit einer Außenschale umspritzt ist. Die Außenschale weist zwei Montagelaschen auf, in welchen jeweils ein Verstärkungselement mit eingespritzt sein kann. Dieses Kameramodul kann an dafür vorgesehenen Stellen am Kraftfahrzeug durch Verschrauben befestigt werden. Das Kameramodul wird in dafür vorgesehene Kameramontageöffnungen eingesetzt und mittels der Montagelaschen mit dem Kraftfahrzeug, beispielsweise dem Außenspiegelgehäuse, verschraubt.

Nachteilig ist, dass die vorgesehene Montagerichtung M des Kameramoduls an den fahrzeugseitigen Bauteilen von der Entformungsrichtung E des spritzgussgefertigten Außenspiegels unterschiedlich ist, wodurch das Spritzgusswerkzeug des fahrzeugseitigen Bauteils aufwendiger und somit teurer hergestellt werden muss. Eine Änderung der Trennebene des Spritzgusswerkzeugs ist unerwünscht, da die Trennebene auf dem Außenspiegel sichtbar wäre.

Weitere Kameramodule umfassend einen Kameraträger, ein Kameragehäuse und ein kraftfahrzeugseitiges Bauteil, wobei der Kameraträger zumindest einen ersten Befestigungsabschnitt und zumindest einen zweiten Befestigungsabschnitt aufweist, und wobei der Kameraträger über den ersten Befestigungsabschnitt an dem Kameragehäuse des Kameramoduls in einer ersten Montagerichtung befestigt ist und wobei der zweite Befestigungsabschnitt zur Befestigung mit dem kraftfahrzeugseitigen Bauteil vorgesehen ist, wobei der zweite Befestigungsabschnitt zur Befestigung in einer von der ersten Montagerichtung (A) verschiedenen zweiten Montagerichtung (B) ausgebildet ist, sind aus den Dokumenten WO 2005/080137 A1, DE 10 2009 052 988 A1, JP 2004 182040 A und US 2014/063233 A1 bekannt. WO 2005/080137 A1 kann als nächstliegender Stand der Technik angesehen werden.

### Zusammenfassung der Erfindung

Es ist eine Aufgabe der Erfindung ein Kameramodul für ein Kraftfahrzeugderart weiterzubilden, dass eine einfache und schnelle Montage möglich ist..

Die Lösung der Aufgabe erfolgt durch ein Kameramodul für ein Kraftfahrzeuggemäß Anspruch 1.

Erfindungsgemäß verwendete kraftfahrzeugseitige Bauteile werden kostengünstig bevorzugt im Spritzgussverfahren hergestellt. An diesen Bauteilen können mehrere Ausformungen, beispielsweise Schraubdome ausgebildet sein, die zur Befestigung anderer Bauteile, wie beispielsweise des Kameramoduls, dienen. Das kraftfahrzeugseitige Bauteil hat eine vorgegebene Entformungsrichtung E, welche so gewählt ist, dass keine Trennebene am Bauteil, zumindest im sichtbaren Bereich, sichtbar ist. Es ist weiter gewünscht, dass das für die Herstellung verwendete Spritzgusswerkzeug mit möglichst wenigen oder gar keinen Schiebern eingesetzt werden kann. Die erforderliche Montagerichtung zur Befestigung eines Kameramoduls in einer gewünschten Position unterscheidet sich in der Regel von dieser Entformungsrichtung.

Durch die erfindungsgemäße Ausgestaltung eines Kameraträgers mit ersten und zweiten Befestigungsabschnitten in unterschiedlichen Richtungen kann die Montagerichtung einer Kamera bzw. eines Kameragehäuses am Kameraträger von der Richtung der Montage des Kameraträgers am Kraftfahrzeug entkoppelt werden.

Die Schraubdome können in einer bevorzugten Ausführungsform metallische Einsätze aufweisen, welche bevorzugt umspritzt sind und ein Innengewinde für die Verschraubung aufweisen.

Weiterbildungen der Erfindung sind in den abhängigen Ansprüchen, der Beschreibung sowie den beigefügten Zeichnungen angegeben.

Vorzugsweise ist der erste Befestigungsabschnitt als in der ersten Montagerichtung verlaufender zweiter Schraubdom ausgebildet.

In einer erfindungsgemäßen Ausführungsform ist der zweite Befestigungsabschnitt zur Verschraubung mit einem in der zweiten Montagerichtung verlaufenden ersten Schraubdom des kraftfahrzeugseitigen Bauteils vorgesehen.

Der Kameraträger weist erfindungsgemäß zusätzlich zumindest einen dritten Befestigungsabschnitt auf, der mit einem Klemmabschnitt des kraftfahrzeugseitigen Bauteils verbindbar ist. Dadurch wird erreicht, dass die Montage schneller erfolgen kann, da Verschraubungen teilweise durch Klemmverbindungen ersetzt werden und somit weniger Verschraubungen erforderlich sind.

In einer vorteilhaften Ausführungsform weist der Kameraträger eine Positionierhülse auf, die zumindest teilweise in eine Kameramontageöffnung des fahrzeugseitigen Bauteils einsetzbar ist.

Die Kamera ist teilweise, insbesondere die Kameralinse ganz oder teilweise, in die Positionierhülse eingesetzt. Das hat den Vorteil, dass die Kameralinse vor Seitenkräften, insbesondere im montierten Zustand, geschützt ist und die Kameralinse, die mit einer Platine der Kamera verbunden sein kann, in ihrer Position sicher gehalten ist. Hätte die Kameralinse beispielsweise Kontakt mit dem fahrzeugseitigen Bauteil, könnte diese, aufgrund möglicher Seitenkräfte durch Druck des kraftfahrzeugseitigen Bauteils, auf der Platine verrutschen und wäre nicht mehr funktionsfähig.

Vorzugsweise entspricht der Kameraträger der Geometrie des kraftfahrzeugseitigen Bauteils. Der Kameraträger kann, da er bevorzugt im Spritzgussverfahren hergestellt ist, auf einfache Weise der Geometrie des kraftfahrzeugseitige Bauteils angepasst werden, wodurch das kraftfahrzeugseitige Bauteil in einer fast beliebigen Form ausgebildet werden kann, was oft aus Styling-Gründen gewünscht ist.

Vorzugsweise kann das kraftfahrzeugseitige Bauteil ein Außenspiegel sein.

Insbesondere ist das kraftfahrzeugseitige Bauteil eine Gehäuseblende des Außenspiegels. Das Kameramodul ist dabei in der Gehäuseblende des Außenspiegels befestigt, lediglich die Kameralinse des Kameramoduls ist durch die Kameramontageöffnung in der Gehäuseblende sichtbar.

### Kurzbeschreibung der Zeichnungen

Die Erfindung wird im Folgenden beispielhaft unter Bezugnahme auf die Zeichnungen beschrieben.
- Fig. 1: ist eine Schnittansicht einer im Stand der Technik bekannten Kamerabefestigung.
- Fig. 2: ist eine Schnittansicht eines exemplarischen Kameramoduls.
- Fig. 3: ist eine Schnittansicht eines erfindungsgemäßen Kameramoduls.

### Detaillierte Beschreibung der Erfindung

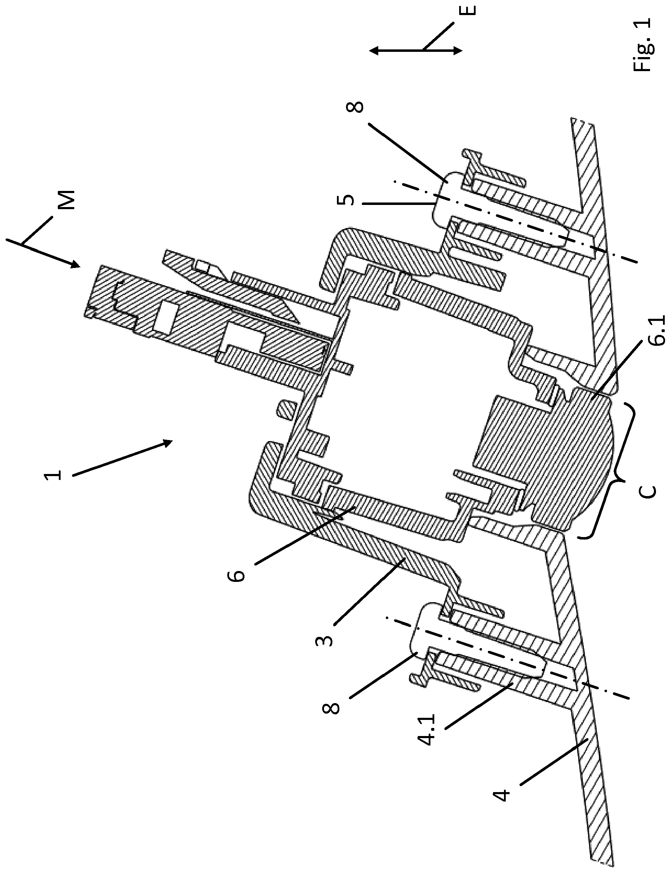

Fig. 1 zeigt eine Kamerabefestigung wie sie im Stand der Technik bekannt ist. Dargestellt ist ein Kameramodul 1 mit einem Kameragehäuse 3 und einer Kamera 6, wobei das Kameragehäuse 3 an einem kraftfahrzeugseitigen Bauteil 4 befestigt ist.

Die Kamera 6 ist hierbei in eine Kameramontageöffnung C im kraftfahrzeugseitigen Bauteil 4 eingesetzt. Wie es aus der Zeichnung zu erkennen ist, weist die Kameramontageöffnung C einen relativ großen Spalt auf, um zu verhindern, dass das kraftfahrzeugseitige Bauteil 4 die Kameralinse 6.1 berühren kann. Die Befestigung des Kameramoduls 1 an dem kraftfahrzeugseitigen Bauteil 4 erfolgt über eine Schraubverbindung. Hierzu sind an dem kraftfahrzeugseitigen Bauteil 4 erste Schraubdome 4.1 angespritzt, die ein Innengewinde aufweisen. Die Schraubdome 4.1 erstrecken sich dabei in Montagerichtung des Kameramoduls an dem kraftfahrzeugseitigen Bauteil 4. Die Montagerichtung ist durch den Pfeil M angezeigt. Das Kameragehäuse 3 weist entsprechende Befestigungslaschen 6.2 auf, in die Durchgangsbohrungen eingebracht sind. Bei der Montage des Kameramoduls 1 wird das Kameramodul an dem kraftfahrzeugseitigen Bauteil im Bereich der Kameramontageöffnung angeordnet und ausgerichtet und über Befestigungsschrauben 8 über die Befestigungslaschen an den Schraubdomen 4.1 verschraubt.

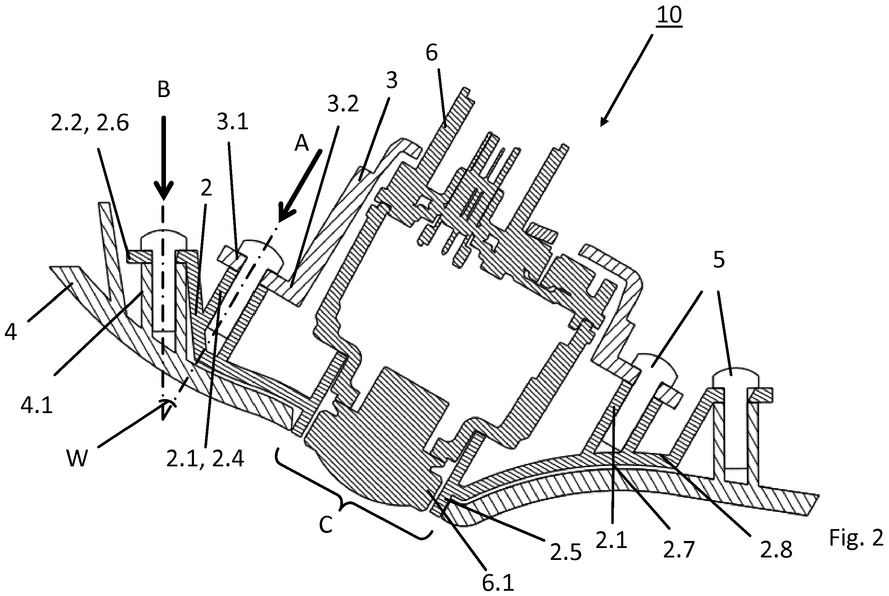

In Fig. 2 ist ein Kameramodul 10 dargestellt. Dargestellt ist ein Kameramodul 10 mit einem Kameragehäuse 3, einem Kameraträger 2 und einer Kamera 6, wobei der Kameraträger 2 an einem kraftfahrzeugseitigen Bauteil 4 befestigt ist. Das kraftfahrzeugseitige Bauteil 4 ist aus einem Kunststoffmaterial, vorzugsweise einem thermoplastischen Kunststoff in einem Spritzgießverfahren hergestellt.

Die Kamera 6 ist in einer Positionierhülse 2.5 des Kameraträgers eingesetzt und wird mit der Positionierhülse 2.5 in eine Kameramontageöffnung C im kraftfahrzeugseitigen Bauteil 4 eingesetzt. Die Befestigung des Kameramoduls 1 an dem kraftfahrzeugseitigen Bauteil 4 erfolgt über eine Schraubverbindung zwischen Kameraträger 2 und kraftfahrzeugseitigem Bauteil 4. Hierzu sind an dem kraftfahrzeugseitigen Bauteil 4 erste Schraubdome 4.1 angespritzt, die ein Innengewinde aufweisen. Die Schraubdome 4.1 erstrecken sich dabei in einer Montagerichtung B an dem kraftfahrzeugseitigen Bauteil 4. Die Montagrichtung B entspricht im Wesentlichen der Hauptentformungsrichtung des kraftfahrzeugseitigen Bauteils 4.

Der Kameraträger 2 weist eine dem kraftfahrzeugseitigen Bauteil 4 zugewandte Seite 2.7 und eine gegenüberliegende Seite 2.8 auf, wobei die zugewandte Seite 2.7 bzw. Oberfläche der Oberfläche bzw. der Geometrie des kraftfahrzeugseitigen Bauteils 4 angepasst ausgeführt ist. Der Kameraträger ist ebenfalls aus einem Kunststoffmaterial, vorzugsweise einem thermoplastischen Kunststoffmaterial in einem Spritzgießverfahren hergestellt. In etwa mittig ist in den Kameraträger 2 eine Durchgangsöffnung eingebracht, wobei an der Durchgangsöffnung eine zylindrische Positionierhülse 2.5 angeformt ist. Der Kameraträger 2 weist eine Anzahl erster Befestigungsabschnitte 2.1 auf. Wie es aus der Schnittdarstellung der Figur 2 zu erkennen ist, sind an den Befestigungsabschnitten zweite Schraubdome 2.4 angespritzt, die mit einem Innengewinde ausgeführt sind. Die Anzahl der Befestigungsabschnitte mit zweiten Schraubdomen 2.4 hängt von der Geometrie des kraftfahrzeugseitigen Bauteils 4 ab. Die zweiten Schraubdome 2.4 sind hinsichtlich ihrer Längserstreckung in Richtung einer ersten Montagerichtung A ausgebildet. Die Montagerichtung A entspricht im Wesentlichen der Richtung der Montage einer Kamera bzw. eines Kameragehäuses am Kameraträger bzw. der Richtung der Mittelachse der Kamera 6 (Mittelachse M). Das Kameragehäuse 3 ist über Schraubverbindungen an den zweiten Schraubdomen 2.4 verbunden. Hierfür sind an einem unteren Endbereich 3.2 nach außen kragende Montagelaschen 3.1 angeformt. In die Montagelaschen 3.1 sind Durchgangsbohrungen eingebracht, wobei die Durchgangsbohrungen einen Durchmesser aufweisen, welcher einen Toleranzausgleich erlaubt und so eine genaue Positionierung des Kameragehäuses 3 im Kameraträger 2 ermöglicht. Da die Kamera 6 mit Kameralinse 6.1 in dem Kameragehäuse 3 gehalten ist, ist hierdurch insbesondere eine Positionierung der Kameralinse 6.1 in der Positionierhülse 2.5 möglich. Die Positionierhülse 2.5 des Kameraträgers 2 ragt in die Kameramontageöffnung C was den Vorteil bietet, dass der Spalt zwischen Kameralinse 6.1 und Positionierhülse 2.5 bzw. der Spalt zwischen kraftfahrzeugseitigen Bauteil 4 und Positionierhülse 2.5 minimiert werden kann, da die Positionierhülse 2.5 verhindert, dass Seiten- oder Querkräfte auf die Kameralinse 6.1 wirken können. Der Kameraträger 2 weist zweite Befestigungsabschnitte 2.2 auf, welche in Form von Montagelaschen 2.6 ausgebildet sind. Die Montagelaschen 2.6 sind randseitig an dem Kameraträger nach außen kragend angeformt und erstrecken sich senkrecht zu der zweiten Montagerichtung B. Die zweite Montagerichtung B verläuft in einem Winkel W zu der ersten Montagerichtung A. Das Kameramodul 10 ist über die Montagelaschen 2.6 des Kameraträgers 2 mit den Schraubdomen 4.1 des kraftfahrzeugseitigen Bauteils 4 verschraubt.

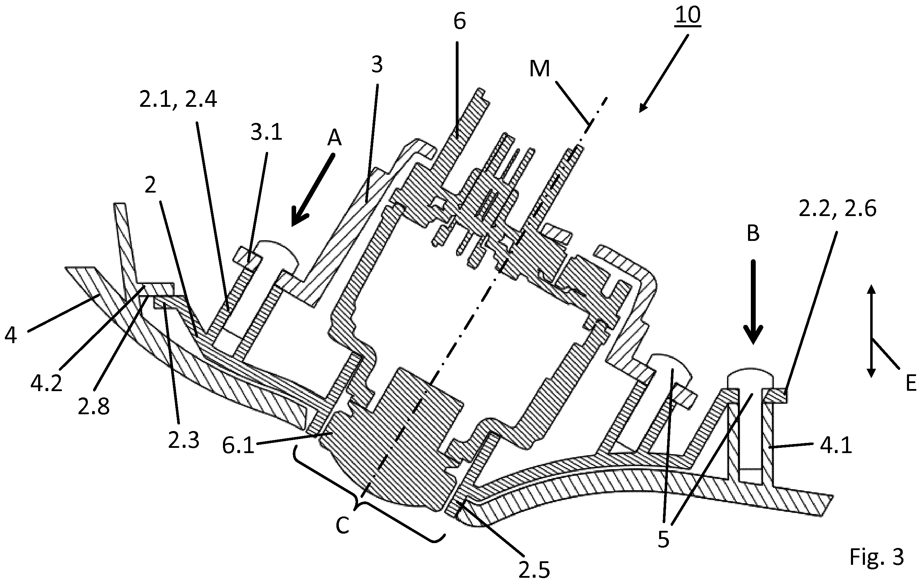

Fig. 3 zeigt eine erfindungsgemäße Befestigungsmöglichkeit des Kameramoduls 10 am kraftfahrzeugseitigen Bauteil 4. Der Kameraträger 2 weist einen dritten Befestigungsabschnitt 2.3 auf, wobei der dritte Befestigungsabschnitt 2.3 mit dem kraftfahrzeugseitigen Bauteil 4 durch Klemmen verbunden wird. Das kraftfahrzeugseitige Bauteil 4 weist einen Klemmabschnitt 4.2, beispielsweise als Steg ausgebildet, der passend zur zweiten Montagerichtung B ausgebildet ist. Der dritte Befestigungsabschnitt 2.3 des Kameraträgers 2 wird unter den Steg 4.2 des kraftfahrzeugseitigen Bauteils 4 geklemmt und so in Position gehalten. Die Klemmfläche 2.8 des Stegs 4.2 erstreckt sich senkrecht zu der Montagerichtung B. Eine sichere Verbindung mit dem kraftfahrzeugseitigen Bauteil 4 wird durch Verschrauben über den zweiten Befestigungsabschnitt 2.2 des Kameraträgers 2 erreicht. Hierzu werden Schrauben 5 durch die Durchgangsbohrung in der Montagelasche gesteckt und in die Bohrungen mit Innengewinde der Schraubdome 4.1 eingeschraubt.

### Bezugszeichenliste

- 1: Kameramodul
- 2: Kameraträger
- 2.1: erster Befestigungsabschnitt
- 2.2: zweiter Befestigungsabschnitt
- 2.3: dritter Befestigungsabschnitt
- 2.4: zweiter Schraubdom
- 2.5: Positionierhülse
- 2.6: Montagelasche
- 3: Kameragehäuse
- 3.1: Montagelasche
- 4: kraftfahrzeugseitiges Bauteil
- 4.1: erster Schraubdom
- 4.2: Klemmabschnitt, Steg
- 5: Verschraubung
- 6: Kamera
- 6.1: Kameralinse

- A: erste Montagerichtung
- B: zweite Montagerichtung
- C: Kameramontageöffnung

## Patentansprüche

1. Kameramodul (10) für ein Kraftfahrzeug umfassend einen Kameraträger (2), ein Kameragehäuse (3) und ein kraftfahrzeugseitiges Bauteil (4), wobei der Kameraträger (2) zumindest einen ersten Befestigungsabschnitt (2.1) und zumindest einen zweiten Befestigungsabschnitt (2.2) aufweist,und wobei der Kameraträger (2) über den zumindest einen ersten Befestigungsabschnitt (2.1) an dem Kameragehäuse (3) des Kameramoduls (1) in einer ersten Montagerichtung (A) befestigt ist und dass der zweite Befestigungsabschnitt (2.2) zur Befestigung mit dem kraftfahrzeugseitigen Bauteil (4) vorgesehen ist, wobei der zweite Befestigungsabschnitt (2.2) zur Befestigung in einer von der ersten Montagerichtung (A) verschiedenen zweiten Montagerichtung (B) ausgebildet ist und wobei der zumindest eine zweite Befestigungsabschnitt (2.2) zur Verschraubung (5) mit einem in der zweiten Montagerichtung (B) verlaufenden ersten Schraubdom (4.1) des kraftfahrzeugseitigen Bauteils (4) vorgesehen ist,
**dadurch gekennzeichnet, dass** der Kameraträger (2) zumindest einen dritten Befestigungsabschnitt (2.3) aufweist, der mit einem Klemmabschnitt (4.2) des kraftfahrzeugseitigen Bauteils (4) verbindbar ist, wobei der Klemmabschnitt (4.2) als Steg mit einer Klemmfläche (2.8) ausgebildet ist, und wobei die Klemmfläche (2.8) sich senkrecht zur zweiten - Montagerichtung (B) erstreckt und wobei in der geklemmten Position der dritte Befestigungsabschnitt (4.2) unter dem Klemmabschnitt (4.2) in Position gehalten ist.

2. Kameramodul (10) nach Anspruch 1,
**dadurchgekennzeichnet**, dass der zumindest eine erste Befestigungsabschnitt (2.1) als in der ersten Montagerichtung (A) verlaufender zweiter Schraubdom (2.4) ausgebildet ist.

3. Kameramodul (10) nach zumindest einem der vorhergehenden Ansprüche,
**dadurch gekennzeichnet , dass** der Kameraträger (2) eine Positionierhülse (2.5) aufweist, die zumindest teilweise in eine Kameramontageöffnung (C) des fahrzeugseitigen Bauteils (4) einsetzbar ist.

4. Kameramodul (10) nach Anspruch 3,
**dadurch gekennzeichnet, dass** die Kamera (6) teilweise, insbesondere die Kameralinse (6.1), in die Positionierhülse (2.5) eingesetzt ist.

5. Kameramodul (10) nach zumindest einem der vorhergehenden Ansprüche,
**dadurch gekennzeichnet, dass** der Kameraträger (2) im Wesentlichen der Geometrie des kraftfahrzeugseitigen Bauteils (4) entspricht.

6. Kameramodul (10) nach zumindest einem der vorhergehenden Ansprüche,
**dadurch gekennzeichnet, dass** das kraftfahrzeugseitige Bauteil (4) ein Teil des Außenspiegels ist.

7. Kameramodul (10) nach Anspruch 6,
**dadurch gekennzeichnet, dass** das kraftfahrzeugseitige Bauteil (4) eine Gehäuseblende des Außenspiegels ist.

8. Kameramodul (10) nach einem oder mehreren der vorangehenden Ansprüche, wobei das kraftfahrzeugseitige Bauteil (4) aus einem in einem Spritzgießverfahren hergestelltes Kunststoffbauteil ist.

9. Kameramodul (10) nach einem oder mehreren der vorangehenden Ansprüche, wobei der Kameraträger (2) aus einem in einem Spritzgießverfahren hergestelltes Kunststoffbauteil ist.

## Claims

1. Camera assembly (10) for a motor vehicle, comprising a camera support (2), a camera housing (3) and a motor-vehicle-mounted component (4), wherein the camera support (2) has at least one first fastening portion (2.1) and at least one second fastening portion (2.2), and wherein the camera support (2) is fastened on the camera housing (3) of the camera assembly (1) in a first installation direction (A) via the at least one first fastening portion (2.1), and in that the second fastening portion (2.2) is provided for fastening to the motor-vehicle-mounted component (4), wherein the second fastening portion (2.2) is designed for fastening in a second installation direction (B), which is different from the first installation direction (A), and wherein the at least one second fastening portion (2.2) is provided for screw connection (5) to a first screw boss (4.1) of the motor-vehicle-mounted component (4), said first screw boss running in the second installation direction (B),
**characterized in that** the camera support (2) has at least one third fastening portion (2.3), which can be connected to a clamping portion (4.2) of the motor-vehicle-mounted component (4), wherein the clamping portion (4.2) is designed in the form of a crosspiece with a clamping surface (2.8), and wherein the clamping surface (2.8) extends perpendicularly to the second installation direction (B), and wherein, in the clamped position, the third fastening portion (4.2) is held in position beneath the clamping portion (4.2).

2. Camera assembly (10) according to Claim 1,
**characterized in that** the at least one first fastening portion (2.1) is designed in the form of a second screw boss (2.4), which runs in the first installation direction (A).

3. Camera assembly (10) according to at least one of the preceding claims,
**characterized in that** the camera support (2) has a positioning sleeve (2.5), which can be inserted at least to some extent into a camera-installation opening (C) of the vehicle-mounted component (4).

4. Camera assembly (10) according to Claim 3,
**characterized in that** part of the camera (6), in particular the camera lens (6.1), is inserted into the positioning sleeve (2.5).

5. Camera assembly (10) according to at least one of the preceding claims,
**characterized in that** the camera support (2) corresponds essentially to the geometry of the motor-vehicle-mounted component (4).

6. Camera assembly (10) according to at least one of the preceding claims,
**characterized in that** the motor-vehicle-mounted component (4) is part of the exterior mirror.

7. Camera assembly (10) according to Claim 6,
**characterized in that** the motor-vehicle-mounted component (4) is a housing cover of the exterior mirror.

8. Camera assembly (10) according to one or more of the preceding claims, wherein the motor-vehicle-mounted component (4) is made of a plastic component produced by injection moulding.

9. Camera assembly (10) according to one or more of the preceding claims, wherein the camera support (2) is made of a plastic component produced by injection moulding.

## Revendications

1. Module caméra (10) pour un véhicule à moteur, comprenant un support de caméra (2), un boîtier de caméra (3) et un composant côté véhicule à moteur (4), le support de caméra (2) comprenant au moins une première section de fixation (2.1) et au moins une deuxième section de fixation (2.2), et le support de caméra (2) étant fixé par l'intermédiaire de ladite au moins une première section de fixation (2.1) au boîtier de caméra (3) du module caméra (1) dans un premier sens de montage (A), et en ce que la deuxième section de fixation (2.2) est destinée à être fixée au composant côté véhicule à moteur (4), la deuxième section de fixation (2.2) étant configurée pour être fixée dans un deuxième sens de montage (B) différent du premier sens de montage (A) et ladite au moins une deuxième section de fixation (2.2) étant destinée à être vissée (5) avec un premier dôme pour vis (4.1), disposé dans le deuxième sens de montage (B), du composant côté véhicule à moteur (4), **caractérisé en ce que** le support de caméra (2) comprend au moins une troisième section de fixation (2.3), qui peut être raccordée avec une section de serrage (4.2) du composant côté véhicule à moteur (4), la section de serrage (4.2) étant configurée sous la forme d'une traverse munie d'une surface de serrage (2.8), et la surface de serrage (2.8) s'étendant perpendiculairement au deuxième sens de montage (B) et, dans la position serrée, la troisième section de fixation (4.2) étant maintenue en position en dessous de la section de serrage (4.2).

2. Module caméra (10) selon la revendication 1, **caractérisé en ce que** ladite au moins une première section de fixation (2.1) est configurée sous la forme d'un deuxième dôme pour vis (2.4) disposé dans le premier sens de montage (A).

3. Module caméra (10) selon au moins l'une quelconque des revendications précédentes, **caractérisé en ce que** le support de caméra (2) comprend un manchon de positionnement (2.5), qui est au moins partiellement insérable dans une ouverture de montage de caméra (C) du composant côté véhicule à moteur (4).

4. Module caméra (10) selon la revendication 3, **caractérisé en ce que** la caméra (6) est partiellement insérée, notamment la lentille de caméra (6.1), dans le manchon de positionnement (2.5).

5. Module caméra (10) selon au moins l'une quelconque des revendications précédentes, **caractérisé en ce que** le support de caméra (2) correspond essentiellement à la géométrie du composant côté véhicule à moteur (4).

6. Module caméra (10) selon au moins l'une quelconque des revendications précédentes, **caractérisé en ce que** le composant côté véhicule à moteur (4) est une partie du rétroviseur extérieur.

7. Module caméra (10) selon la revendication 6, **caractérisé en ce que** le composant côté véhicule à moteur (4) est un panneau de boîtier du rétroviseur extérieur.

8. Module caméra (10) selon une ou plusieurs des revendications précédentes, dans lequel le composant côté véhicule à moteur (4) est à base d'un composant en matière plastique fabriqué dans un procédé de moulage par injection.

9. Module caméra (10) selon une ou plusieurs des revendications précédentes, dans lequel le support de caméra (2) est à base d'un composant en matière plastique fabriqué dans un procédé de moulage par injection.
